# EUROPÄISCHE PATENTSCHRIFT

(11) **EP 1 040 039 B1**
(45) Veröffentlichungstag und Bekanntmachung des Hinweises auf die Patenterteilung: **27.03.2002**
(21) Anmeldenummer: 98966577.3
(22) Anmeldetag: 17.12.1998
(51) Int. Cl.: B62D 15/02, G01D 5/249, G01D 5/347

(54) **ADAPTIVER ABSOLUTER LENKWINKELSENSOR**
ADAPTIVE ABSOLUTE STEERING ANGLE SENSOR
DETECTEUR ADAPTATIF POUR LA DETERMINATION ABSOLUE D'UN ANGLE DE BRAQUAGE

(30) Priorität: 18.12.1997 DE 19758104
(43) Veröffentlichungstag der Anmeldung: 04.10.2000
(73) Patentinhaber: Takata-Petri AG, 63743 Aschaffenburg (DE)
(72) Erfinder: GERMUTH-LÖFFLER, Michael, D-63741 Aschaffenburg (DE); SPIES, Martin, D-86558 Hohenwart (DE)
(74) Vertreter: Baumgärtel, Gunnar, Dr.
(86) Internationale Anmeldenummer: DE9803776
(87) Internationale Veröffentlichungsnummer: WO9932345

(56) Entgegenhaltungen:
- EP-A- 0 377 097
- WO-A-93/25865
- WO-A-98/13669
- DE-A- 19 505 500
- DE-A- 19 705 312
- PATENT ABSTRACTS OF JAPAN vol. 017, no. 302 (P-1553), 10. Juni 1993 & JP 05 026688 A (FURUNO ELECTRIC CO LTD), 2. Februar 1993
- HALLOIN P ET AL: "HYDRAULISCHE LINEARENTRIEBE IN WERKZEUGMASCHINEN" VDI Z, Bd. 132, Nr. SPECIAL 01, 1. April 1990, Seite 6, 9/10, 13 XP000127500

## Beschreibung

Die Erfindung betrifft einen adaptiven absoluten Lenkwinkelsensor zur Absolutbestimmung eines Drehwinkels, insbesondere zur Ermittlung des Lenkwinkels in einem Kraftfahrzeug mittels eines über einen Winkelbereich von 360° angebrachten Codes für die Ermittlung des Winkels, wobei der Code und eine Detektoranordnung relativ zueinander drehbar angeordnet sind, wobei eine absolute Winkelbestimmung durch Auslesen der Kontrastinformation mittels eines Mikroprozessors erfolgt, der sowohl die Winkellage des Codes als auch die Feinauflösung der Winkel durch die relative Lage des erkannten Codes zur Abbildung auf der Fotodetektoranordnung ermittelt und wobei zugleich bei jeder Messung die Gesamtfunktion des Systems überprüft und angepaßt wird.

Aus der EP-A-0 377 097 ist ein Lenkwinkelsensor für ein Kraftfahrzeug bekannt, bei dem auf einem Ring ein einspuriger Streifencode vorgesehen ist, dem mehrere Sensoren zugeordnet sind.

Aus der WO-A-9325865 ist eine Vorrichtung zur Absolutbestimmung der Position eines linear verschiebbaren Bauteils bekannt. Bei dieser Vorrichtung sind der Code und eine Detektoranordnung relativ zueinander verschiebbar. Diese Vorrichtung ist auch zur Absolutbestimmung eines Drehwinkels geeignet, wobei dann ein Code und eine Detektoranordnung relativ zueinander drehbar angeordnet sind.

Der Erfindung liegt die Aufgabe zugrunde, die Bestimmung der absoluten Winkelstellung eines Rotors, insbesondere des Lenkrades eines Kraftfahrzeuges, weiter zu verbessern.

Erfindungsgemäß wird der Code mittels einer an einer einzigen Stelle angebrachten Fotodetektoranordnung ermittelt und zur Winkelbestimmung verwendet. Weiterhin wird ein zusammenhängendes Segment der Codespur auf mindestens eine Fotodektorzeile abgebildet, wobei mindestens ein Codewort erfaßt wird, dem ein vorbestimmter Winkel entspricht, und die Lage des Codewortes wird bezüglich der festen Position der Fotodetektorzeile vermessen. Weiterhin wird der Code über eine Optik so auf die Fotodetektorzeile abgebildet, daß mit einem Auslesezyklus der Zeile sowohl die absolute Winkelinformation ermittelt als auch die Gesamtfunktion des Systems überprüft und angepaßt wird. Zur Überwachung der Systemfunktionen wird mindestens ein Referenzschattenbild auf die Fotodetektorzeile projiziert.

Der Code ist so gewählt, daß er sich über den gesamten Umfang im Betrachtungsbereich der Fotodetektoranordnung nicht wiederholt. Der Code ist einspurig, eindeutig und geschlossen. Der Sensor weist den Vorteil auf, daß gegenüber bekannten Verfahren die Winkelauflösung nicht von der Auflösung des Codes der Codespur und nicht von der Anzahl der Codeworte sondern nur von der Auflösung der Sensoren der Fotodetektoranordnung abhängt, d.h., daß die Winkelauflösung unabhängig vom Code ist. Ohne die Verwendung der Referenzmarke hängt die Winkelauflösung von der Anzahl der Codeworte ab. Wenn mindestens ein Codewort der Codespur von der Fotodetektoranordnung erfaßt wird, hätte man bei 360 Codeworten eine Winkelauflösung von einem Grad.

Da die Winkelauflösung nicht von der Anzahl der Codeworte abhängt, sollten möglichst wenige Codeworte verwendet werden, um die Sensorempfindlichkeit gegenüber Umwelteinflüssen, wie z.B. Verschmutzung, zu verringern. Das wird z.B durch die Verwendung von 6-Bit- oder 7-Bit-Codes anstelle von 8-Bit-Codes erreicht.

Das Vermessen wird softwaremäßig in einem Mikrocontroller vorgenommen, der hierzu die Bilddaten der Fotodetektoranordnung verwendet.

Zur weiteren Erhöhung der Auflösung können mindestens zwei unterschiedliche Abbildungen eines oder mehrerer Umfangscodes auf die Fotodetektoranordnung abgebildet werden.

Die Codespur kann mit parallelem Licht durchleuchtet oder von einer Seite beleuchtet werden.

Bei Verschmutzungen im Bereich optischer Komponenten kann dann z.B. die Leistung der Lichtquellen durch Erhöhung des Steuerstromes leicht angepaßt werden. Auch der Ausfall von einzelnen Detektoren der Fotodetektoranordnung wird bemerkt und kann durch rechnerische Maßnahmen ausgeglichen werden. Die Referenzschattenbilder können durch eine entsprechende Software sowohl zyklisch als auch durch individuelles Einschalten einer rechnergesteuerten Überwachungseinrichtung erzeugt werden.

Weiterhin ist es möglich, daß für den Ausgleich optischer und mechanischer Toleranzen die Flankensteilheit und Abbildungsgröße der auf der Detektorzeile abgebildeten Signale ausgewertet werden.

Der Winkelbereich wird innerhalb 0° bis 360° über die Fahrgeschwindigkeit des Fahzeugs ermittelt. Zur Erfassung des absoluten Lenkwinkels auch bei abgeschalteten Fahrzeugsystemen wird der Lenkwinkel durch kurzes Einschalten des Lenkwinkelsensors in Zeitintervallen, in denen keine Drehung vorzugsweise größer 180° möglich ist, ermittelt.

Dadurch, daß mit einer einzigen Fotodetektoranordnung der Winkel im Bereich von 360° sehr schnell ausgewertet werden kann, ist das System durch einfaches Mitregistrieren der 360° Überschreitung und damit für mehrere Umdrehungen geeignet. Um das nicht nur für den Fahrbetrieb zu gewährleisten, muß das System im Standbybetrieb jeweils kurzzeitig eingeschaltet werden, wobei die Einschaltintervalle so gewählt werden, daß in diesem Intervall keine Lenkraddrehung größer 360° möglich ist. Da das System zur Datenübertragung eine Schnittstelle zum Fahrzeugrechner hat, kann von dort aus die Fahrzeuggeschwindigkeit übernommen werden, um den Nullbereich des Lenkwinkels zu definieren, denn ab einer bestimmten Geschwindigkeit ist bei normalen Fahrzeugen kein Lenkwinkel über z.B. +/-90° von der Nullstellung aus fahrbar.

Bei einem adaptiven absoluten Winkelsensor ist weiterhin mindestens eine Lichtquelle für die Beleuchtung eines Winkelbereichs des Codes vorgesehen, und es ist eine Fotodetektoranordnung für die Erfassung des beleuchteten Winkelbereichs des Codes vorgesehen, wobei der Lichtquelle und der Fotodektektoranordnung ein Mikrocontroller zugeordnet ist.

In einer ersten Ausführungsform sind als Lichtquelle zwei lichtemittierende Dioden symmetrisch zur optischen Achse angeordnet, wobei diese zusammen mit der Fotodetektoranordnung und einer Optik auf derselben Seite des Kreisringes vorgesehen sind.

In einer zweiten Ausführungsform ist ein an hellen Stellen des Codes lichtdurchlässiger kreisförmiger Codierring vorgesehen. Weiterhin sind mindestens eine lichtemittierende Diode auf einer Seite des Codierringes und die Fotodetektoranordnung auf der anderen Seite des Codierringes angeordnet. Eine Optik ist- vorzugsweise auf der Seite der lichtemittierenden Diode vorgesehen.

Zur Erhöhung der Sicherheit des Winkelsensors und zur Erfassung von Codefehlern ist in einer weiteren Ausgestaltung vorgesehen, daß die Fotodetektoranordnung zwei Sensoren aufweist, die bezüglich des Verlaufs der Codespur zu deren synchronen Betrachtung vertikal übereinander angeordnet sind und daß die Bilder beider Sensoren miteinander verglichen werden. Durch den Vergleich der beiden Bilder können lokale Verschmutzungspartikel (Code, Optik) sowie Sensorfehler erkannt werden. Als Sensoren können zwei Zeilensensoren oder zwei übereinanderliegende Abschnitte eines Flächensensors vorgesehen sein.

In einer weiteren Ausgestaltung sind zwei Sensoren zur synchronen Registrierung benachbarter Codeworte der Codespur horizontal nebeneinander angeordnet.

Als Fotodetektoren sind vorzugsweise ladungsgekoppelte Elemente (CCD) vorgesehen.

Die Hell-Dunkel-Linien der Codeworte sollten zur weiteren Verringerung der Sensorempfindlichkeit gegenüber Umwelteinflüssen möglichst großen Abmessungen haben. Vorzugsweise weisen die Hell-Dunkel-Linien der Codeworte eine Breite von 2 bis 3 mm auf.

In einer Ausführungsform ist vorgesehen, daß zwischen Lichtquelle und dem transparenten Codierring eine Mattscheibe angeordnet ist, und daß die Optik und die Fotodetektoranordnung auf der anderen Seite des Codierringes vorgesehen sind.

In einer weiteren Ausführungsform weist ein transparenter Codierring abschnittsweise nebeneinander liegende Zylinderlinsen zur Erzeugung des Codes und Abbildung der Lichtquellen auf der Fotodetektoranordnung auf. Bei dieser Ausführungsform wird eine zusätzliche Optik eingespart. Durch die Zylinderlinsen entstehen Streifen unterschiedlicher Helligkeit auf dem Fotodetektorarray.

In einer weiteren Ausgestaltung ist vorgesehen, daß der Codierring einen prismatischen Querschnitt aufweist, wobei eine in axialer Richtung des Codierringes strahlende Lichtquelle angeordnet ist.

In einer weiteren Ausführungsform sind auf einem transparenten Codierring abschnittsweise nebeneinanderliegende Zylinder oder Linsen zur Erzeugung des Codes und Abbildung der Lichtquellen auf der Fotodetektoranorndung angeordnet, wobei sich die Zylinder in axialer Richtung des Codierringes erstrecken und mit einer Stirnfläche auf dem Codierring befestigt sind und den Lichtquellen zugeordnet sind und mit ihrer anderen, freiliegenden Stirnflächen der Fotodetektoranordnung zugeordnet sind. Durch Bereiche mit und ohne Zylinder und Gestaltung der Dichte bzw. mit und ohne Linsen kann ein Code aufgebracht und entsprechend detektiert werden. Die freiliegenden Stirnflächen der Zylinder sind zweckmäßig plan oder linsenförmig ausgebildet.

In einer Ausführungsform ist dem transparenten Codierring, der lichtdurchlässige Bereiche und lichtundurchlässige Bereiche aufweist, mindestens eine punktförmige Lichtquelle zugeordnet. In einer ersten Ausgestaltung sind zwei punktförmige Lichtquellen nebeneinander in konstantem Abstand sowie eine einzige Fotodetektoranordnung vorgesehen. Diese Anordnung weist den Vorteil auf, daß trotz der Änderung des radialen Abstandes des Codierringes durch radialen Schlag des Lenkrades oder trotz Änderung des Abstandes der Komponenten untereinander durch mechanische oder thermische Einflüsse infolge der unterschiedlichen Schattenbildung der beiden Lichtquellen, deren Abstand konstant bleibt, die Lage und Winkellage des Codes auf der Fotodetektoranordnung genau detektiert werden kann.

Die gleiche vorteilhafte Wirkung kann dadurch erzielt werden, daß eine punktförmige Lichtquelle und zwei in unterschiedlichem Abstand zur Lichtquelle übereinander angeordnete Fotodetektorzeilen vorgesehen sind.

In einer weiteren Ausgestaltung ist vorgesehen, daß dem winkelbestimmenden Code auf dem Codierring mindestens ein Referenzcode zugeordnet ist. Dabei kann der Referenzcode neben dem winkelbestimmenden Code angeordnet sein, oder oberhalb und unterhalb des winkelbestimmenden Codes vorgesehen sein.

Die Erfindung soll in Ausführungsbeispielen anhand von Zeichnungen erläutert werden. Es zeigen:
- Fig. 1: den prinzipiellen Aufbau eines Lenkwinkelsensors zur Durchführung des erfindungsgemäßen Verfahrens in einer Auflichtvariante;
- Fig. 1a: die Draufsicht auf einen Abschnitt der Codespur;
- Fig. 2: die Zuordnung der fotoempfindlichen Zellen einer CCD-Zeile zu den Spannungsamplituden;
- Fig. 3: eine Ausführungsform des Lenkwinkelsensors, bei dem zusätzlich ein Schattenbild auf eine CCD-Zeile projiziert wird;
- Fig. 4: eine Draufsicht auf einen Code mit einem Grob- und einem Feinbereich;
- Fig. 4a: einen Schnitt durch die Codeanordnung mit zugehörigen optischen Baugruppen.
- Fig. 5: eine Durchlichtvariante des Lenkwinkelsensors;
- Fig. 5a: die Draufsicht auf einen Abschnitt der Codespur;
- Fig. 6: eine Ausführungsform des Lenkwinkelsensors mit zwei senkrecht übereinander liegenden CCD-Zeilen, denen eine Codespur zugeordnet ist;
- Fig. 6a: eine Seitenansicht der Ausführungsform der Fig. 6;
- Fig. 7: eine Ausführungsform des Lenkwinkelsensors mit zwei senkrecht übereinander liegenden CCD-Zeilen, denen je eine Code-Spur zugeordnet ist;
- Fig. 7a: eine Seitenansicht der Ausführungsform der
- Fig. 8: eine Ausführungsform des Lenkwinkelsensors mit zwei waagerecht nebeneinander liegenden CCD-Zeilen;
- Fig. 9: eine Ausführungsform mit eingespritzten Codierungen in einem Kunststoffring;
- Fig. 10a,b: eine Ausführungsform der Codierung mittels Zylinderlinsen;
- Fig. 11: einen Codierring mit prismatischem Querschnitt;
- Fig. 12a: einen Codierring mit Zylindern;
- Fig. 12b: einen Codierring mit direkt auf diesem angeordneten Linsen;
- Fig. 13: einen Codierring mit einer Laserdiode als Lichtquelle;
- Fig. 14a,b: einen Codierring mit zwei Laserdioden als Lichtquelle;
- Fig. 15a,b: einen Codierring mit einer Laserdiode und zwei nachgeordneten CCD-Zeilen;
- Fig. 16: die Kombination eines winkelbestimmenden Codes mit einem daneben liegenden Referenzcode;
- Fig. 17: die Kombination eines winkelbestimmenden Codes mit darüber und darunter liegendem Referenzcode;
- Fig. 18: die Zuordnung der Beleuchtung und der CCD-Zeile zur Kombination nach Fig. 17;
- Fig. 19: das durch die Anordnung nach Fig. 19 erzeugte Signal.

Auf dem Umfang von 360° eines drehbaren Kreisringes 1 einer Lenkeinrichtung ist ein digitaler, einspuriger Code 2 angebracht. Der Code ist so ausgestaltet, daß er sich über den gesamten Umfang in einem Betrachtungsbereich 3 nicht wiederholt. Er kann als einspurig, eindeutig und geschlossen bezeichnet werden. Für die Ermittlung des absoluten Lenkwinkels innerhalb von 360° reicht damit dieser einspurige Code.

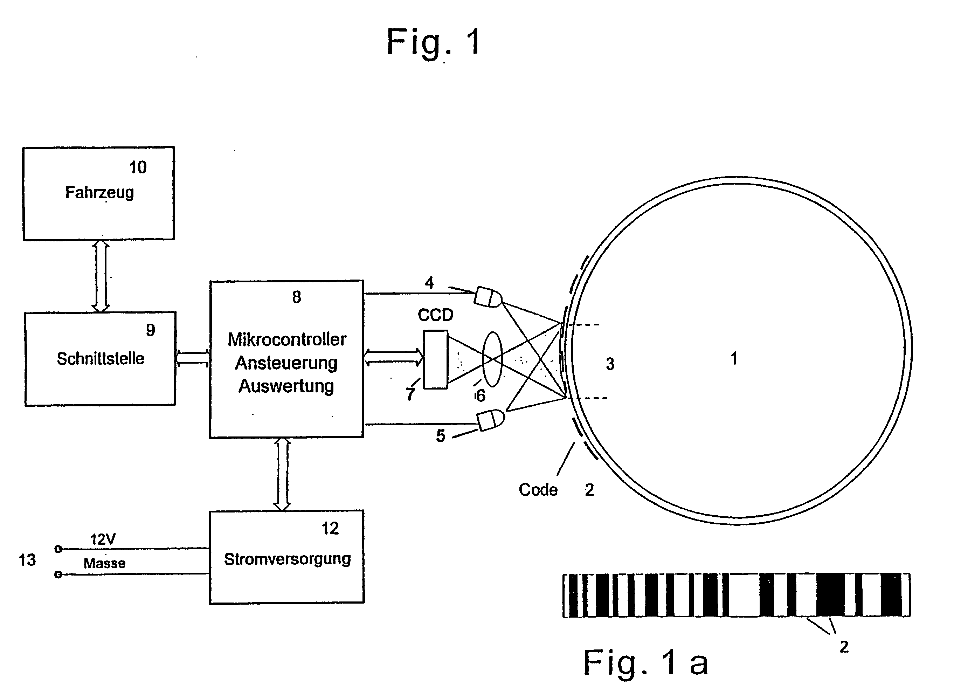

Der Betrachtungsbereich 3 wird durch lichtemittierende Dioden 4 und 5 beleuchtet und über eine Optik 6 auf eine Fotodetektorzeile 7 abgebildet. Diese Fotodetektorzeile ist als ladungsgekoppelte Detektorzeile (CCD-Zeile) ausgeführt. Der Code 2 im Betrachtungsbereich 3 ist gemäß der Fig. 1a als Schwarzweiß-Code ausgeführt. Der Code wird als Kontrastunterschied von der Fotodetektorzeile auf einen Mikrocontroller 8 gegeben. Dieser wertet die Kontrastunterschiede aus, dekodiert sie und gibt die Drehwinkelposition über eine Schnittstelle 9 an das Fahrzeug 10 weiter.

Die gesamte Einheit wird über eine Stromversorgung 12 aus dem 12 Volt Fahrzeugnetz 13 versorgt.

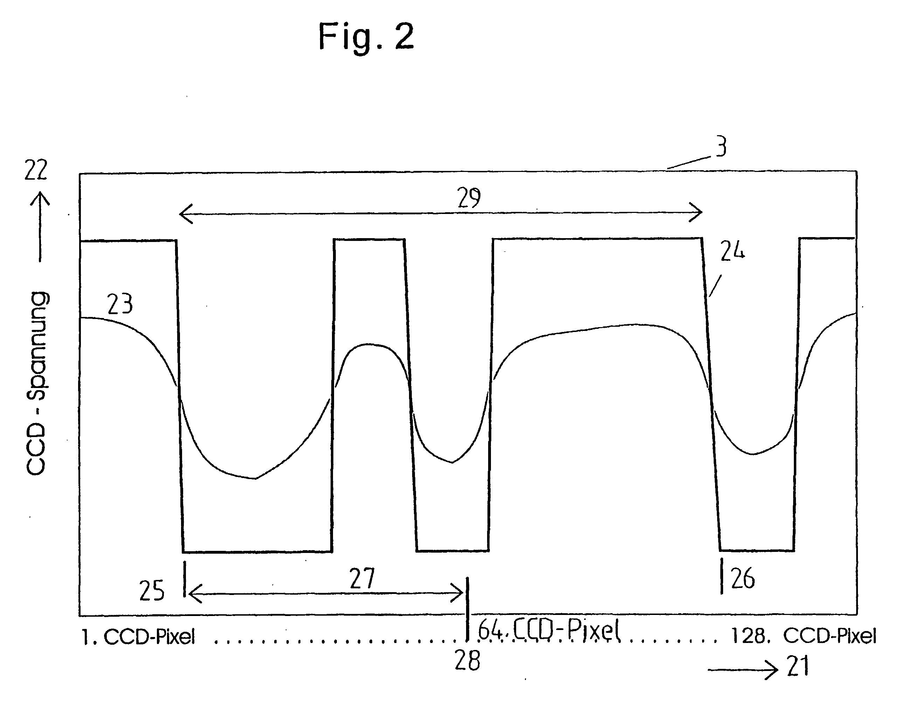

Zur Erfassung der Winkelposition wird bei diesem Verfahren ein zusammenhängendes Segment der Codespur, nämlich der Betrachtungsbereich 3, auf die Fotodetektorzeile 7 abgebildet. Innerhalb von 0 bis 360° kann der absolute Lenkwinkel eindeutig mit einer vom gewählten Code abhängigen Auflösung bestimmt werden. Der Betrachtungsbereich wird so gewählt, daß mindestens ein Codewort 29 (Fig. 2) der Codespur von der CCD-Zeile 7 erfaßt wird. Jedes Codewort entspricht einem Lenkwinkel, wobei die Winkelauflösung von der Anzahl der Codeworte abhängt. Bei 360 Codeworten hat man eine Auflösung von einem Grad. Auf diese Weise wird der Grobwinkel bestimmt.

Bei diesem Verfahren wird eine hohe Auflösung, d.h. eine Feinwinkelbestimmung, unabhängig von der Auflösung des Codes der Codespur und der Anzahl der Codeworte erzielt. Dazu wird gemäß der Fig. 2 in dem Betrachtungsbereich 3 die Position vom Anfang 25 und vom Ende 26 eines Codewortes 29 bezüglich einer festen Referenzmarke 28 des feststehenden Fotodetektors vermessen. Die Referenzmarke ist in diesem Ausführungsbeispiel beim Pixel Nr. 64 vorgesehen. Das Vermessen erfolgt rein softwaremäßig im Mikrocontroller 8, der hierzu die Bilddaten der Fotodetektorzeile 7 verwendet.

Als Ergebnis erhält man die Lage 27 des Codewortes bezüglich der Referenzmarke 28 der Fotodetektorzeile 7, gemessen mit der Auflösung des Fotodetektors. Die Lage bzw. die Entfernung des Codewortes zur Referenzmarke und damit die Winkelauflösung des Lenkwinkelsensors ist damit nur von der Auflösung abhängig, mit der die Fotodetektorzeile den Betrachtungsbereich auflöst. Im Ausführungsbeispiel hat die Fotodetektorzeile 128 Bildpunkte, womit Lenkwinkelauflösungen von < 0,2⁰ erreicht werden.
Der absolute Winkel setzt sich somit aus dem Codewort und der Lage des Codewortes zur Fotodetektorzeile zusammen.

Da die Auflösung des Lenkwinkelsensors unter der Voraussetzung, daß der Betrachtungsbereich 3 mindestens ein Codewort erfaßt, nur von der Auflösung der Fotodetektorzeile abhängt, können die Hell/Dunkel-Linien des Codewortes große Abmessungen haben, z.B. 2 - 3 mm. Es ist zweckmäßig, einen Code mit möglichst wenigen Codeworten zu verwenden. Das wird z.B. durch die Verwendung von 6 Bit- bzw. 7 Bit-Codes anstelle von z.B. 8 Bit-Codes erreicht. Dadurch wird die Sensorempfindlichkeit gegenüber Umwelteinflüssen, wie z.B. Verschmutzung, verringert.

In der Fig. 2 sind auf der x-Achse 21 die lineare Zuordnung der fotoempfindlichen Zellen der CCD-Zeile im Betrachtungsbereich und auf der y-Achse 22 die zugehörigen Spannungsamplituden dargestellt. Ist der Code im Betrachtungsbereich 3 sehr gut auf die Fotodetektorzeile 7 abgebildet, ergeben sich sehr deutliche Kontrastunterschiede mit entsprechend scharfen Abgrenzungen. Ist die Abbildung aufgrund einer zu großen radialen Toleranz oder wegen Verschmutzung unscharf, ergibt sich ein Rohsignal der Fotodetektorzeile 7, dessen Verlauf dem Graphen 23 entspricht. Durch eine bekannte Kurvenanalyse und Bewertung im Mikrocontroller 8 wird der Code rekonstruiert, so daß anschließend der Signalzug 24 vorliegt. Durch die Auswertung der Amplituden in Abhängigkeit von der Zahl der Fotodetektoren der Fotodetektorzeile 7 kann bei fortschreitender Verschmutzung oder bei Alterung der Bauteile die Verstärkung erhöht werden oder die Leuchtdichte an den Dioden 4 und 5 entsprechend adaptiv eingestellt werden. Diese Einstellungen können auch über den Umfang oder den Betrachtungsbereich angepaßt werden. Axiale Toleranzen werden einfach über die Höhe der Codespur 2 ausgeglichen.

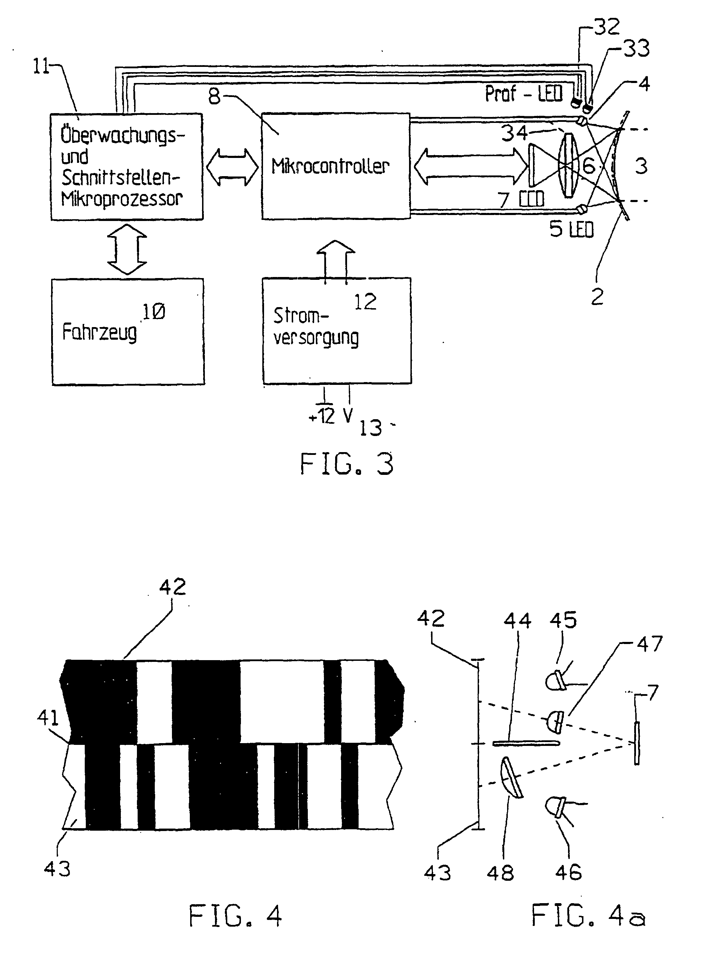

Zur weiteren Erhöhung der Empfindlichkeit kann der Lenkwinkelsensor gemäß den Figuren 4 und 4a weiter ausgestaltet werden. Der Code auf einem Umfang 41 ist in einen oberen groben Bereich 42 zur Erkennung der 0 bis 360° und in einen unteren feinen Bereich 43 aufgeteilt. Auf die Fotodetektorzeile 7 wird zur Ermittlung des Grobwinkels der über eine lichtemittierende Diode 45 beleuchtete grobe Codebereich 42 über eine Optik 47 abgebildet. Anschließend wird der feine Codebereich 43 mittels einer lichtemittierenden Diode 46 beleuchtet und ein kleinerer Ausschnitt über eine Optik 48 auf die Fotodetektorzeile 7 abgebildet. Dieser kleinere Ausschnitt kann wiederum einen Code beinhalten, der +/-10° abdeckt. Beide Optiken sind durch eine Blende 44 getrennt. Durch die Abbildung eines kleineren Ausschnittes kann die Auflösung und Genauigkeit entsprechend erhöht werden.

Eine weitere Ausführungsform des Lenkwinkelsensors ist in Fig. 3 dargestellt. Die Anordnung entspricht der der Fig. 1, jedoch ist zur Prüfung des Gesamtsystems ein Überwachungs- und Schnittstellenmikroprozessor 11 vorgesehen, in dem eine Software installiert ist, die entweder beim Einschalten und/oder zyklisch eine oder mehrere lichtemittierende Dioden 32 und 33 einschaltet, die über eine Maske 34 auf die Fotodetektorzeile 7 abgebildet werden. Durch sequentielles Einschalten der Dioden 32 und 33 werden auf der Fotodetektorzeile nacheinander ein Schattenbild oder mehrere Schattenbilder erzeugt. Damit kann die Funktion der Gesamtanordnung über alle Komponenten geprüft werden. Bei Verschmutzungen im Bereich der optischen Komponenten kann dann z.B. die Lichtleistung der lichtemittierenden Dioden 4 und 5 durch entsprechende Erhöhung des Steuerstromes leicht angepaßt werden. Auch der Ausfall einzelner Detektorender Fotodetektorzeile wird bemerkt und kann durch rechnerische Maßnahmen ausgeglichen werden.

Während der gesamten Betriebszeit, in der die Messungen des Lenkwinkels stattfinden, ist es möglich, durch Auswertung der Anstiegs- und Abfallzeiten der Signale gemäß Fig. 2, der Amplituden der Signale sowie der Abbildung des Codes 2 das Gesamtsystem nicht nur im Sinne einer Diagnose zu überwachen, sondern auch Toleranzen auszugleichen und die Genauigkeit über nahezu alle Betriebseinflüsse zu erhalten.

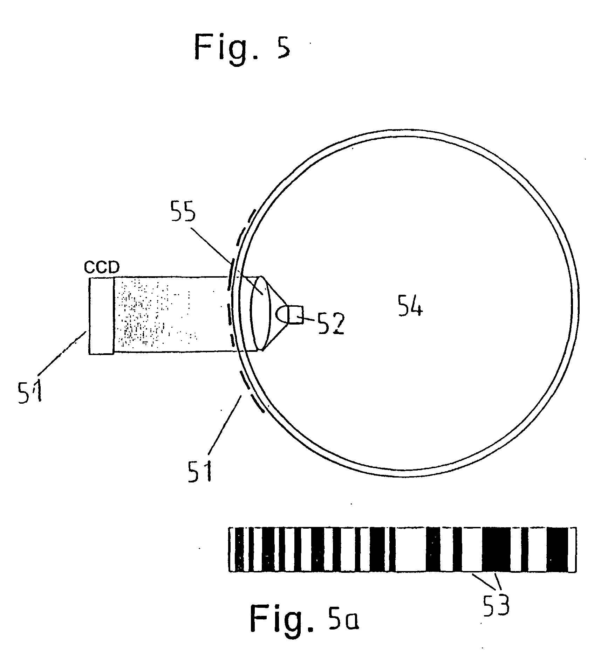

Während in der Fig. 1 ein Ausführungsbeispiel des Lenkwinkelsensors dargestellt ist, der mit Auflicht arbeitet, zeigt die Fig. 5 einen Sensor, der mit Durchlicht arbeitet. In diesem Fall ist ein Kreisring 54 im Bereich der Hell-Linien eines Codes 53 lichtdurchlässig. Im Inneren des Ringes ist eine lichtemittierende Diode 52 und eine Optik 55 angeordnet. Beiden ist außerhalb des Kreisringes eine Fotodetektorzeile 51 zugeordnet. Der Code 53 gemäß der Fig. 5a entspricht dem Code der Fig. 1a. Die Codespur wird in diesem Fall mit parallelem Licht durchleuchtet.

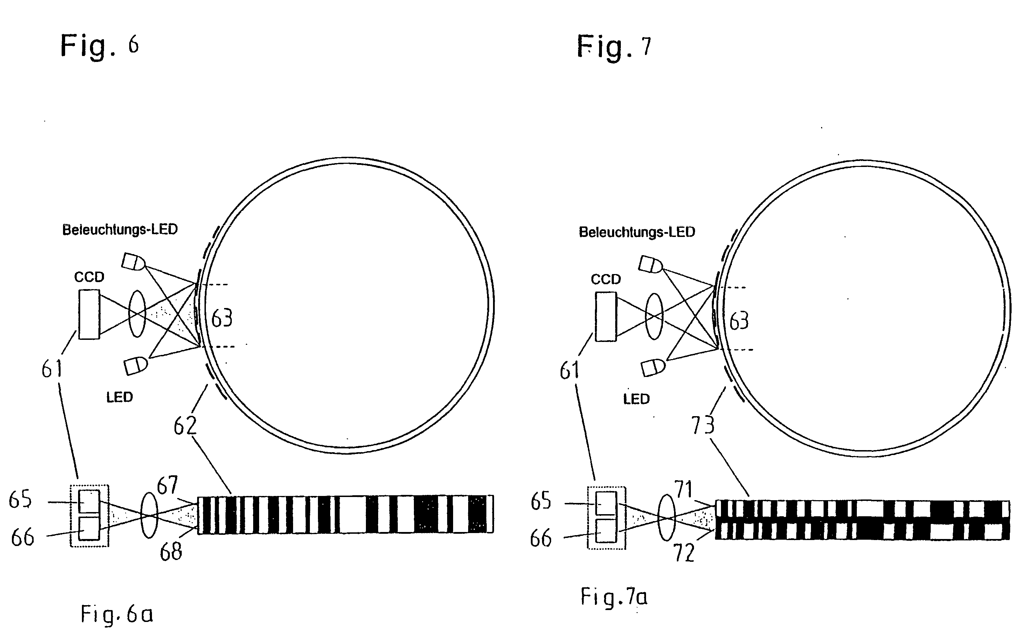

Im Ausführungsbeispiel der Figuren 6 und 6a sind zwei Zeilensensoren 65 und 66 vorgesehen, die dieselbe Codespur 62 an verschiedenen Stellen betrachten. Beide sind bezüglich des Verlaufs der Codespur vertikal angeordnet und erfassen den Betrachtungsbereich 63 synchron aber an verschiedenen Positionen 67, 68.

Durch den Vergleich der beiden Bilder können lokale Verschmutzungspartikel, z.B. auf dem Code oder der Optik, sowie Sensorfehler erkannt werden. Anstelle zweier einzeiliger Zeilensensoren 65 und 66 kann auch ein Flächensensor 61 für diese Funktion verwendet werden.

Beim Ausführungsbeispiel der Figuren 7 und 7a ist ein Code 73 mit zwei Spuren 71, 72 vorgesehen, wie es aus der Fig. 7a ersichtlich ist. Jede der beiden Codespuren wird mit einem Zeilensensor 65, 66 oder unterschiedlichen Zeilen eines Flächensensors 61 betrachtet. Der Code der zweiten Codespur kann nun z.B. invers zu dem der ersten Codespur sein, so daß sich durch einfache Subtraktion der Meßwerte im Mikrocontroller 8 eine einfache Kontrolle des Sensoreinganges ergibt.

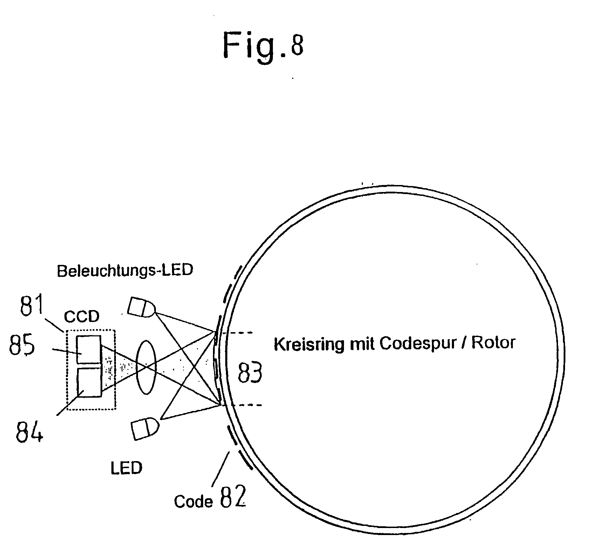

Eine weitere Anordnung ist in der Fig. 8 dargestellt. Zur Erhöhung der Sensorsicherheit ist in diesem Ausführungsbeispiel ein zweiter CCD-Sensor 85 horizontal neben dem ersten CCD-Sensor 84 plaziert. Durch die horizontale Anordnung werden verschiedene Codeworte an zwei unterschiedlichen Stellen der Codespur 82 registriert. Die Differenz der Meßergebnisse beider CCD-Sensoren muß den Differenzbetrachtungswinkel beider Fotodetektoren zur Codespur ergeben. Dieser Winkel ist aufgrund der Position der CCD-Sensoren bekannt.

Anstelle eines zweiten CCD-Sensors kann auch ein entsprechend größerer linearer CCD-Sensor verwendet werden. Desweiteren ist die Zusammenfassung zweier Fotodetektorzeilen in einer integrierten Schaltung 81 mit einem gemeinsamen Gehäuse möglich.

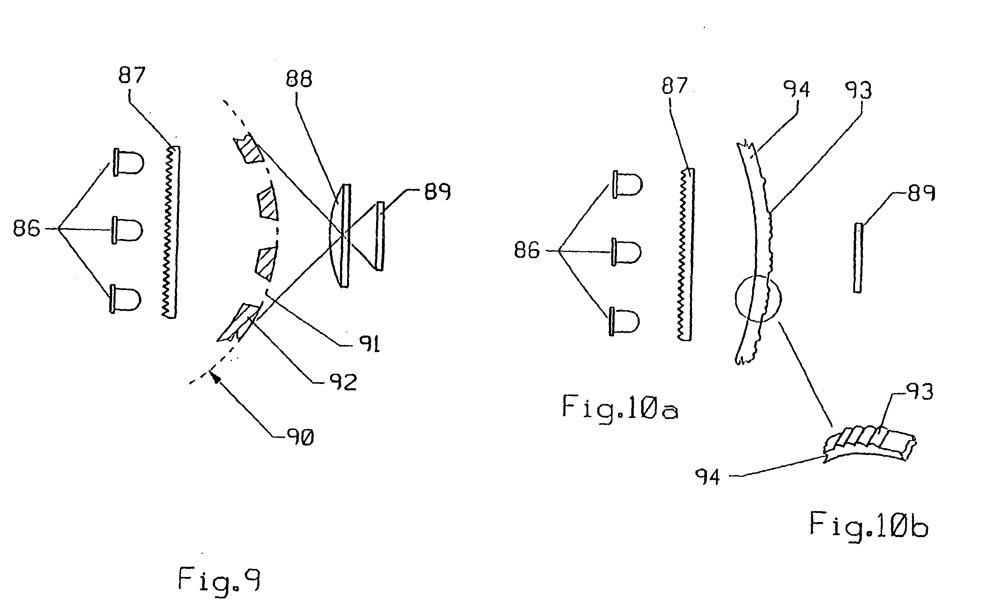

Im Ausführungsbeispiel der Fig. 9 werden eine oder mehrere LED's 86 direkt oder über eine Mattscheibe 87 über eine Optik 88 auf eine Fotodetektoranordnung 89 abgebildet. Die Codierung besteht aus einem Ring 90, bei dem lichtdurchlässige Winkelbereiche 91 und lichtundurchlässige Winkelbereiche 92 durch eingespritzte Aussparungen oder durch entsprechend lichtdurchlässige und lichtundurchlässige Kunststoffe erzeugt werden.

Beim Ausführungsbeispiel der Figuren 10a und b werden eine oder mehrere LED's 86 direkt oder über die Mattscheibe 87 oder Fresnellinse mittels einer Anordnung von gleichartigen oder unterschiedlich gestalteten Zylinderlinsen 93 ohne weitere Optik auf dem Fotodetektorarray 89 abgebildet. Durch die Zylinderlinsen 93 entstehen Streifen unterschiedlicher Helligkeit auf der Fotodetektoranordnung 89. Durch entsprechende Anordnung und Verteilung der Zylinderlinsen 93 auf dem aus einem transparentem Medium gefertigten Codierring 94 wird ein entsprechender Code erzeugt, der zur Abtastung des Lenkwinkels dient. Die Anordnung der Zylinderlinsen ist in Fig 10b gezeigt.

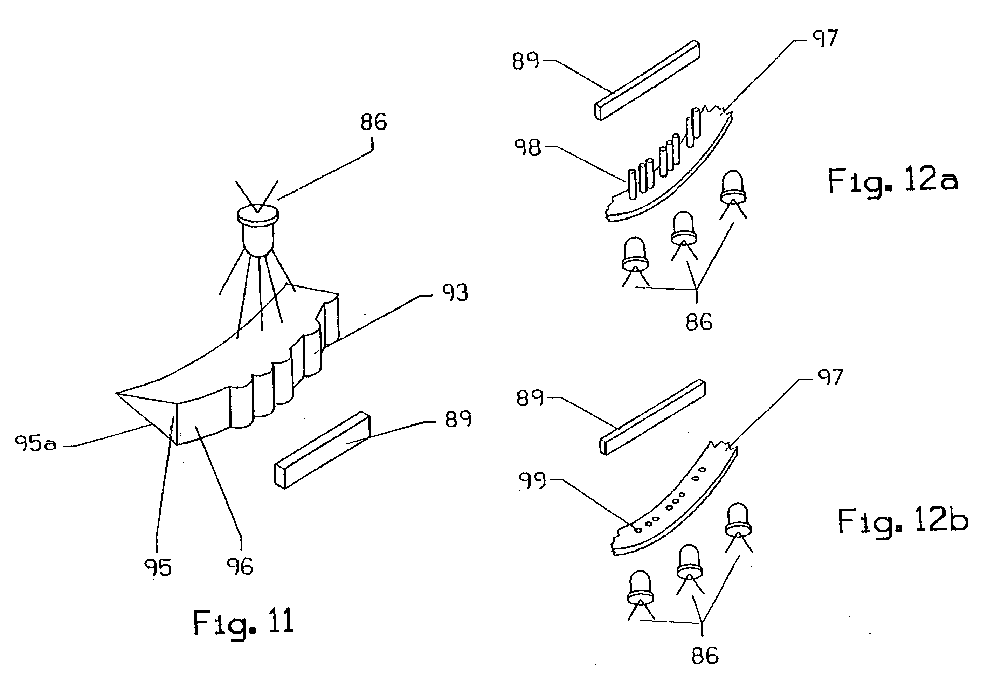

Anstelle der Abbildung der LED's auf eine Mattscheibe wie in den Figuren 9 und 10 kann ein Codierring 95 so ausgeführt werden, daß er aus einer prismatischen Anordnung besteht, bei der eine oder mehrere LED's 86 z.B. axial die Anordnung bestrahlen (Fig. 11). Die Umlenkung der Lichtstrahlen geschieht an der Hypotenuse 95a des Prismas. Der radiale Lichtaustritt am Umfang des Codierringes 95 ist so gestaltet, daß sich dort quasi plane Flächenbereiche 96 und Zylinderlinsenanordnungen 93 befinden. Durch die planen Flächen entsteht ein homogener Lichtaustritt auf die radial angebrachte Fotodetektoranordnung 89. Durch die Zylinderlinsen 93 entstehen auf der Fotodetektoranordnung 89 Bereiche niedriger und hoher Leuchtdichte. Die Codierung zur Lenkwinkelbestimmung erfolgt durch entsprechende Verteilung der quasi planen Flächen und durch die gleichartig oder unterschiedlich gestalteten Zylinderlinsen.

Bei einer weiteren Ausführungsform nach Fig. 12a wird in axialer Richtung Licht über LED,s 86 in einen transparenten Codierring 97 eingestrahlt und dieser Codierring weist eine Anzahl von Zylindern 98 auf, die an einem Ende direkt mit dem Codierring verbunden sind und am anderen Ende entweder plan oder linsenförmig gestaltet sind. Damit wird an jedem dieser Zylinder eine entsprechende Leuchtdichte auftreten, die über die Fotodetektoranordnung 89 detektiert werden kann. Durch Bereiche mit und ohne Zylinder und Gestaltung der Dichte kann ein Code aufgebracht und entsprechend detektiert werden. Eine Variante dieser Ausführungsform zeigt die Fig. 12b, bei der anstelle der Zylinder 98 Linsen 99 direkt auf dem Codierring 97 vorgesehen sind. Die Wirkung entspricht der der vorher beschriebenen Anordnung mit Zylindern.

Neben den in den Figuren gezeigten Ausführungsformen, die als Beispiel für die erfindungsgemäße Ausführung dienen, können die Anordnungen in radialer oder axialer Form gestaltet werden, wobei die Richtung des Lichtdurchtritts in beiden möglichen Richtungen gewählt werden kann.

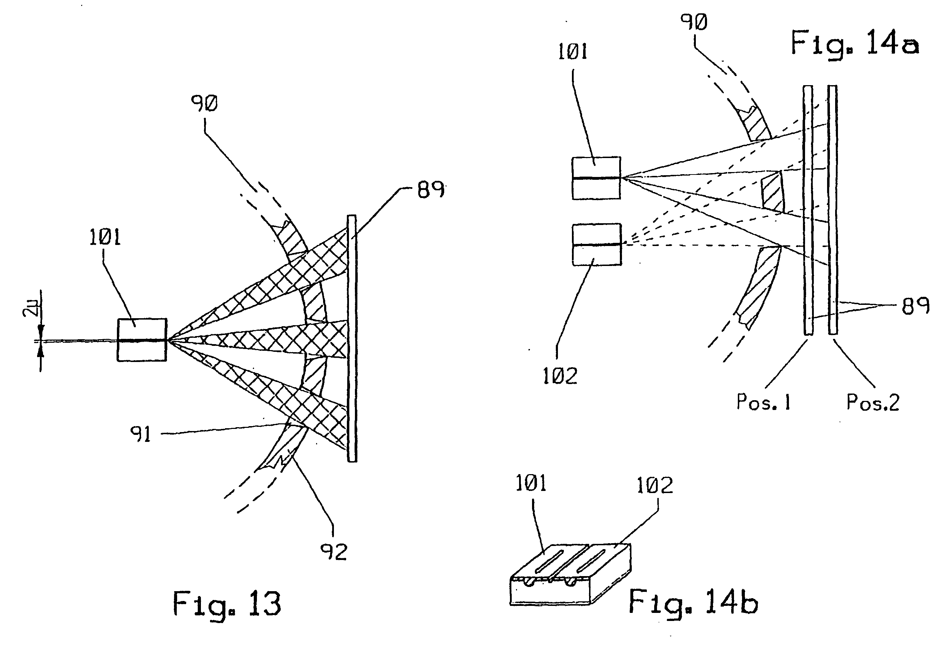

Beim Ausführungsbeispiel der Fig. 13 ist keine Linsenanordnung erforderlich. Eine nahezu punktförmige Lichtquelle, z.B. durch Verwendung einer Laserdiode 101 mit einer lichtemittierenden Fläche von z.B. 2µ x 3µ mit der Sperrschicht z.B. parallel zur Achse beleuchtet den Codierring 90, der aus den lichtdurchlässigen Bereichen 91 und den lichtundurchlässigen Bereichen 92 besteht. Hinter dem Codierring 90 ist eine lineare Fotodetektoranordnung 89 vorgesehen, auf der bei den lichtdurchlässigen Bereichen eine Leuchtdichteverteilung durch die Codierung entsteht. Diese Leuchtdichteverteilung wird ausgewertet.

Die Anordnung nach Fig. 13 kann durch die Anwendung von zwei nebeneinander, in bekanntem Abstand angebrachten Laserdioden 101 und 102 verbessert werden, wie es in Fig. 14a und b dargestellt ist. Die Auswertung erfolgt wie bei der Ausführungsform der Fig. 13 beschrieben. Ändert sich jedoch der radiale Abstand des Codierringes 90 durch radialen Schlag des Lenkrades oder ändert sich durch mechanische oder thermische Einflüsse der Abstand der Komponenten untereinander, was in der Fig. 14a durch die Pos.1 und 2 der Fotodetektoranordnung angedeutet ist, so kann durch die unterschiedliche Schattenbildung der beiden Laserdioden 101 und 102, deren Abstand konstant bleibt, auf der Fotodetektoranordnung 89 trotzdem die Lage und Winkellage des Codes genau detektiert werden. Dabei können die Laserdioden 101 und 102 schnell nacheinander angeregt werden, wobei die Zeit so kurz gewählt ist, z.B. 10 µs - 100 µs, daß in dieser Zeit keine die Genauigkeit einschränkende Winkeländerung am Lenkrad auftritt. Anstatt der Laserdioden ist natürlich auch eine monolitische LED in Doppel- oder Dreifachanordnung einsetzbar, bei der lichtemittierende Flächen mit sehr kleiner Ausdehnung in axialer Richtung durch entsprechende Masken erzeugt werden.

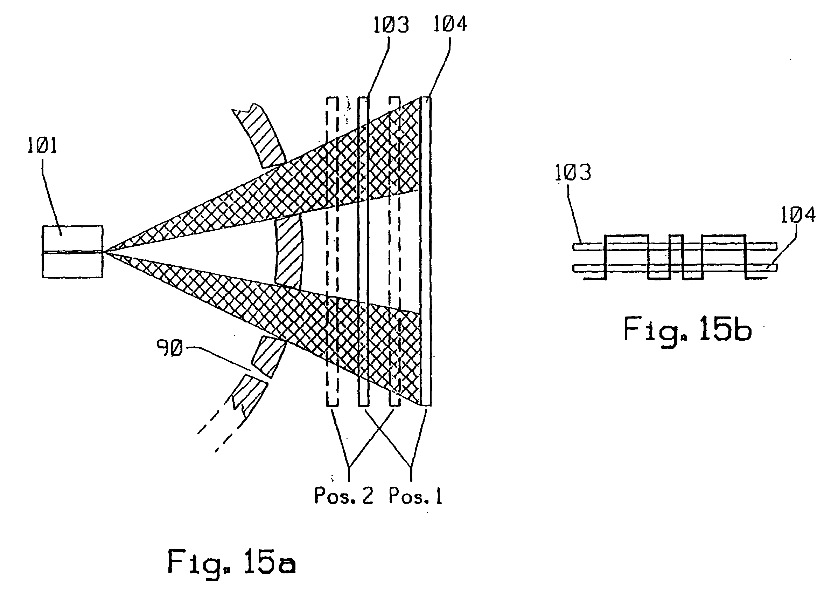

Der gleiche Effekt wird auch durch Verwendung einer einzigen Laserdiode 101 oder LED erzielt, wenn die Schattenabbildung auf zwei Fotodetektorzeilen 103 und 104 erfolgt, die in unterschiedlichem Abstand vom Codering 90 angebracht sind (Figuren 15a und 15b). Durch die Verhältnisse der Schattenstruktur kann der Code genau ermittelt wrden. Durch die absolute Ausdehnung des Codes auf den Fotodetektorzeilen wird der Abstand des Coderinges bei axialem Schlag ermittelt.

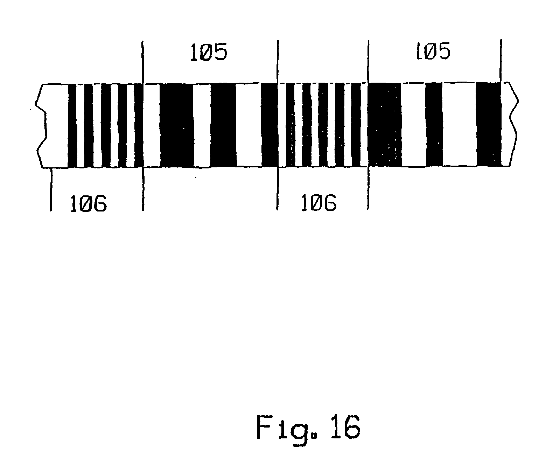

Die Ausführungsform der Figur 16 zeigt eine Kombination eines winkelbestimmenden Codes 105 mit einem Referenzcode 106. Über die Projektion des Codes über eine Länge, die mindestes den Winkelcode und den Referenzcode überdeckt, kann sowohl der Winkel ausgewertet werden, als auch über den Referenzcode einerseits das CCD oder die Fotodeketoranordnunggeprüft werden, andererseits über die bekannten Abstände des Referenzcodes der Abstand und der genaue Winkel bestimmt werden.

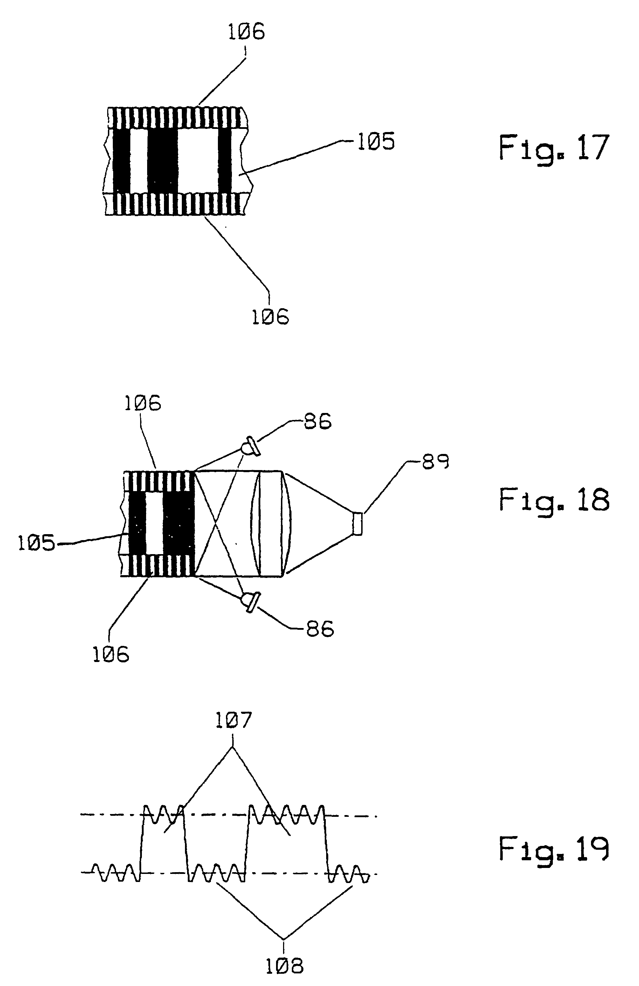

Der winkelbestimmende Code 105 kann auch parallel zum Referenzcode 106 aufgebracht werden, wie es in der Fig. 17 dargestellt ist. Wird der Referenzcode 106, so wie hier gezeigt, oben und unten am Rand der Winkelcodierungen aufgebracht, so wirkt sich eine axiale Toleranz auf die Abbildung des Referenzcodes 106 nicht aus.

Beide Codes können gemeinsam abgebildet und mittels LED's 86 beleuchtet werden, wie es aus Fig. 18 ersichtlich ist. Damit kann an der Fotodetektoranordnung 89 ein Winkelsignal 107 und Referenzsignal 108 entsprechend der Fig. 19 erzeugt und ausgewertet werden.

## Patentansprüche

1. Adaptiver absoluter Lenkwinkelsensor zur Absolutbestimmung eines Drehwinkels, insbesondere zur Ermittlung des Lenkwinkels in einem Kraftfahrzeug mittels eines über einen Winkelbereich von 360° angebrachten Codes (2) für die Ermittlung des Winkels, wobei der Code (2) und eine Detektoranordnung (7) relativ zueinander drehbar angeordnet sind, wobei eine absolute Winkelbestimmung durch Auslesen der Kontrastinformation mittels eines Mikroprozessors (8) erfolgt, der sowohl die Winkellage des Codes als auch die Feinauflösung der Winkel durch die relative Lage des erkannten Codes zur Abbildung auf der Fotodetektoranordnung ermittelt und wobei zugleich bei jeder Messung die Gesamtfunktion des Systems überprüft und angepaßt wird,
**dadurch gekennzeichnet,**
**daß** der Code mittels einer an einer einzigen Stelle angebrachten Fotodetektoranordnung ermittelt und zur Winkelbestimmung verwendet wird, daß ein zusammenhängendes Segment der Codespur auf mindestens eine Fotodektorzeile (7) abgebildet wird, wobei mindestens ein Codewort erfaßt wird, dem ein vorbestimmter Winkel entspricht, daß die Lage des Codewortes bezüglich der festen Position der Fotodetektorzeile (7) vermessen wird, daß der Code über eine Optik (6) so auf die Fotodetektorzeile (7) abgebildet wird, daß mit einem Auslesezyklus der Zeile sowohl die absolute Winkelinformation ermittelt als auch die Gesamtfunktion des Systems überprüft und angepaßt wird, und daß zur Überwachung der Systemfunktionen mindestens ein Referenzschattenbild auf die Fotodetektorzeile (7) projiziert wird.

2. Adaptiver absoluter Lenkwinkelsensor nach Anspruch 1, **dadurch gekennzeichnet, daß** das Vermessen softwaremäßig in einem Mikrocontroller (8) vorgenommen wird, der hierzu die Bilddaten der Fotodetektorzeile (7) verwendet.

3. Adaptiver absoluter Lenkwinkelsensor nach Anspruch 1 oder 2, **dadurch gekennzeichnet, daß** zur Erhöhung der Auflösung mindestens zwei unterschiedliche Abbildungen eines oder mehrerer Umfangscodes auf die Fotodetektorzeile abgebildet werden.

4. Adaptiver absoluter Lenkwinkelsensor nach mindestens einem der vorhergehenden Ansprüche, **dadurch gekennzeichnet, daß** ein 6-Bit oder 7-Bit-Codewort verwendet wird.

5. Adaptiver absoluter Lenkwinkelsensor nach mindestens einem der vorhergehenden Ansprüche, **dadurch gekennzeichnet, daß** die Codespur mit parallelem Licht durchleuchtet oder von einer Seite beleuchtet wird.

6. Adaptiver absoluter Lenkwinkelsensor nach mindestens einem der vorhergehenden Ansprüche, **dadurch gekennzeichnet, daß** für den Ausgleich optischer und mechanischer Toleranzen die Flankensteilheit und Abbildungsgröße der auf der Detektorzeile abgebildeten Signale ausgewertet werden.

7. Adaptiver absoluter Lenkwinkelsensor nach mindestens einem der vorhergehenden Ansprüche, **dadurch gekennzeichnet, daß** der Winkelbereich innerhalb 0° bis 360° über die Fahrgeschwindigkeit des Fahzeugs ermittelt wird.

8. Adaptiver absoluter Lenkwinkelsensor nach mindestens einem der vorhergehenden Ansprüche, **dadurch gekennzeichnet, daß** zur Erfassung des absoluten Lenkwinkels auch bei abgeschalteten Fahrzeugsystemen der Lenkwinkel durch kurzes Einschalten des Lenkwinkelsensors in Zeitintervallen, in denen keine Drehung größer 180° möglich ist, ermittelt wird.

9. Adaptiver absoluter Winkelsensor nach mindestens einem der vorhergehenden Ansprüche, **dadurch gekennzeichnet, daß** mindestens eine Lichtquelle (4, 5) für die Beleuchtung eines Winkelbereichs (3) des Codes (2) vorgesehen ist , und daß eine Fotodetektoranordnung (7) für die Erfassung des beleuchteten Winkelbereichs (3) des Codes (2) vorgesehen ist, wobei der Lichtquelle und der Fotodektektoranordnung ein Mikrocontroller (8) zugeordnet ist.

10. Adaptiver absoluter Winkelsensor nach Anspruch 9, **dadurch gekennzeichnet, daß** als Lichtquelle zwei lichtemittierende Dioden (4, 5) symmetrisch zur optischen Achse angeordnet sind, wobei diese zusammen mit der Fotodetektoranordnung (7) und einer Optik (6) auf derselben Seite des Codierringes (1) angeordnet sind.

11. Adaptiver absoluter Winkelsensor nach Anspruch 9, **dadurch gekennzeichnet, daß** ein an hellen Stellen des Codes lichtdurchlässiger kreisförmiger Codierring (54) vorgesehen ist, daß mindestens eine lichtemittierende Diode (52) auf einer Seite des Codierringes und die Fotodetektoranordnung (51) auf der anderen Seite des Codierringes angeordnet ist.

12. Adaptiver absoluter Winkelsensor nach Anspruch 11, **dadurch gekennzeichnet, daß** eine Optik (55) auf der Seite der lichtemittierenden Diode (52) vorgesehen ist.

13. Adaptiver absoluter Winkelsensor nach mindestens einem der vorhergehenden Ansprüche, **dadurch gekennzeichnet, daß** die Fotodetektoranordnung zwei Sensoren (65, 66) aufweist, die bezüglich des Verlaufs der Codespur (62) zu deren synchronen Betrachtung vertikal übereinander angeordnet sind und daß die Bilder (67, 68) beider Sensoren miteinander verglichen werden.

14. Adaptiver absoluter Winkelsensor nach Anspruch 13, **dadurch gekennzeichnet, daß** als Sensoren zwei Zeilensensoren (65, 66) oder zwei übereinanderliegende Abschnitte eines Flächensensors (61) vorgesehen sind.

15. Adaptiver absoluter Winkelsensor nach mindestens einem der vorhergehenden Ansprüche, **dadurch gekennzeichnet, daß** zwei Sensoren (84, 85) zur synchronen Registrierung benachbarter Codeworte der Codespur (82) horizontal nebeneinander angeordnet sind.

16. Adaptiver absoluter Winkelsensor nach mindestens einem der vorhergehenden Ansprüche, **dadurch gekennzeichnet, daß** als Fotodetektoren ladungsgekoppelte Elemente (CCD) vorgesehen sind.

17. Adaptiver absoluter Winkelsensor nach mindestens einem der vorhergehenden Ansprüche, **dadurch gekennzeichnet, daß** die Hell-Dunkel-Linien der Codeworte eine Breite von 2 bis 3 mm aufweisen.

18. Adaptiver absoluter Winkelsensor nach mindestens einem der vorhergehenden Ansprüche, **dadurch gekennzeichnet, daß** zwischen Lichtquelle (86) und dem Codierring (90) eine Mattscheibe (87) angeordnet ist, und daß die Optik (88) und die Fotodetektoranordnung (89) auf der anderen Seite des Codierringes (90) vorgesehen sind.

19. Adaptiver absoluter Winkelsensor nach mindestens einem der vorhergehenden Ansprüche, **dadurch gekennzeichnet, daß** ein transparenter Codierring (94) abschnittsweise nebeneinander liegende Zylinderlinsen zur Erzeugung des Codes und Abbildung der Lichtquellen (86) auf der Fotodetektoranordnung (89) aufweist.

20. Adaptiver absoluter Winkelsensor nach mindestens einem der vorhergehenden Ansprüche, **dadurch gekennzeichnet, daß** der Codierring (95) einen prismatischen Querschnitt aufweist, wobei eine in axialer Richtung des Codierringes strahlende Lichtquelle (86) angeordnet ist.

21. Adaptiver absoluter Winkelsensor nach mindestens einem der Ansprüche 9 bis 19, **dadurch gekennzeichnet, daß** auf einem transparenten Codierring (97) abschnittsweise nebeneinanderliegende Zylinder (98) oder Linsen (99) zur Erzeugung des Codes und Abbildung der Lichtquellen (86) auf der, Fotodetektoranordnung (89) vorgesehen sind, wobei sich die Zylinder in axialer Richtung des Codierringes erstrecken und mit einer Stirnfläche auf dem Codierring befestigt sind und den Lichtquellen zugeordnet sind und mit ihrer anderen, freiliegenden Stirnfläche der Fotodetektoranordnung (89) zugeordnet sind.

22. Adaptiver absoluter Winkelsensor nach Anspruch 21, **dadurch gekennzeichnet, daß** die freiliegenden Stirnflächen der Zylinder plan sind oder linsenförmig ausgebildet sind.

23. Adaptiver absoluter Winkelsensor nach mindestens einem der vorhergehenden Ansprüche, **dadurch gekennzeichnet, daß** dem transparenten Codierring (90), der lichtdurchlässige Bereiche (91) und lichtundurchlässige Bereiche (92) aufweist, mindestens eine punktförmige Lichtquelle (101, 102) zugeordnet ist.

24. Adaptiver absoluter Winkelsensor nach Anspruch 23, **dadurch gekennzeichnet, daß** zwei punktförmige Lichtquellen (101, 102) nebeneinander in konstantem Abstand und eine einzige Fotodetektoranordnung (89) vorgesehen sind.

25. Adaptiver absoluter Winkelsensor nach Anspruch 23, **dadurch gekennzeichnet, daß** eine punktförmige Lichtquelle (101) und zwei in unterschiedlichem Abstand zur Lichtquelle (101) übereinander angeordnete Fotodetektorzeilen (103, 104) vorgesehen sind.

26. Adaptiver absoluter Winkelsensor nach mindestens einem der vorhergehenden Ansprüche, **dadurch gekennzeichnet, daß** auf dem Codierring dem winkelbestimmenden Code (105) mindestens ein Referenzcode (106) zugeordnet ist.

27. Adaptiver absoluter Winkelsensor nach Anspruch 26, **dadurch gekennzeichnet, daß** der Referenzcode (106) neben dem winkelbestimmenden Code (105) angeordnet ist.

28. Adaptiver absoluter Winkelsensor nach Anspruch 26, **dadurch gekennzeichnet, daß** der Referenzcode (106) oberhalb und unterhalb des winkelbestimmenden Codes (105) vorgesehen ist.

## Claims

1. Adaptive absolute steering angle sensor for absolute determination of an angle of rotation, in particular for determining the steering angle in a motor vehicle by means of a code, provided over an angular range of 360°, for determining the angle, where the code and a detector arrangement are arranged such that they can rotate relative to one another, where absolute determination of the angle is effected by the contrast information being read by means of a microprocessor which determines both the angular position of the code and the fine resolution of the angles as a result of the relative position of the identified code with respect to the image on the photodetector arrangement, and where, at the same time, the overall function of the system is checked and adapted during each measurement,
**characterized**
**in that** the code is determined by means of a photodetector arrangement provided at a single location and is used for determination of the angle, in that a contiguous segment of the code track is imaged onto at least one photodetector linear array, where at least one code word is detected, a predetermined angle corresponding to said code word, in that the position of the code word with regard to the fixed position of the photodetector linear array is measured, in that the code is imaged onto the photodetector linear array via an optical arrangement in such a way that, with a reading cycle of the linear array, not only is the absolute angle information determined but also the overall function of the system is checked and adapted, and in that, in order to monitor the system functions, at least one reference shadow image is projected onto the photodetector linear array.

2. Adaptive absolute steering angle sensor according to claim 1, **characterized in that** the measurement is performed by software in a microcontroller which, for this purpose, uses the image data of the photodetector linear array.

3. Adaptive absolute steering angle sensor according to claim 1 or 2, **characterized in that**, in order to increase the resolution, at least two different images of one or more circumferential codes are imaged onto the photodetector linear array.

4. Adaptive absolute steering angle sensor according to at least one of the preceding claims, **characterized in that** a 6-bit or 7-bit code word is used.

5. Adaptive absolute steering angle sensor according to at least one of the preceding claims, **characterized in that** the code track is transilluminated with parallel light or is illuminated from one side.

6. Adaptive absolute steering angle sensor according to at least one of the preceding claims, **characterized in that**, for the compensation of optical and mechanical tolerances, the edge steepness and image size of the signals imaged on the detector linear array are evaluated.

7. Adaptive absolute steering angle sensor according to at least one of the preceding claims, **characterized in that** the angular range is determined within 0° to 360° by way of the traveling speed of the vehicle.

8. Adaptive absolute steering angle sensor according to at least one of the preceding claims, **characterized in that**, in order to detect the absolute steering angle even with vehicle systems switched off, the steering angle is determined by briefly switching on the steering angle sensor in time intervals in which rotation of greater than 180° is not possible.

9. Adaptive absolute angle sensor according to at least one of the preceding claims, **characterized in that** provision is made of at least one light source (4, 5) for illuminating an angular range (3) of the code (2), and **in that** provision is made of a photodetector arrangement (7) for detecting the illuminated angular range (3) of the code (2), where a microcontroller (8) is assigned to the light source and to the photodetector arrangement.

10. Adaptive absolute angle sensor according to claim 9, **characterized in that**, as light source, two light-emitting diodes (4, 5) are arranged symmetrically with respect to the optical axis, these being arranged together with the photodetector arrangement (7) and an optical arrangement (6) on the same side of the coding ring (1).

11. Adaptive absolute angle sensor according to claim 9, **characterized in that** a circular coding ring (54) which is optically transparent at light locations of the code is provided, **in that** at least one light-emitting diode (52) is arranged on one side of the coding ring and the photodetector arrangement (51) is arranged on the other side of the coding ring.

12. Adaptive absolute angle sensor according to claim 11, **characterized in that** an optical arrangement (55) is provided on the side of the light-emitting diode (52).

13. Adaptive absolute angle sensor according to at least one of the preceding claims, **characterized in that** the photodetector arrangement has two sensors (65, 66), which are arranged vertically one above the other with regard to the course of the code track (62) for the synchronous observation thereof, and **in that** the images (67, 68) of the two sensors are compared with one another.

14. Adaptive absolute angle sensor according to claim 13, **characterized in that** two linear array sensors (65, 66) or two portions of an area sensor (61) lying one above the other are provided as the sensors.

15. Adaptive absolute angle sensor according to at least one of the preceding claims, **characterized in that** two sensors (84, 85) are arranged horizontally next to one another for synchronous registering of adjacent code words of the code track (82).

16. Adaptive absolute angle sensor according to at least one of the preceding claims, **characterized in that** charge-coupled elements (CCD) are provided as the photodetectors.

17. Adaptive absolute angle sensor according to at least one of the preceding claims, **characterized in that** the light-dark lines of the code words have a width of from 2 to 3 mm.

18. Adaptive absolute angle sensor according to at least one of the preceding claims, **characterized in that** a matt plate (87) is arranged between the light source (86) and the coding ring (90), and **in that** the optical arrangement (88) and the photodetector arrangement (89) are provided on the other side of the coding ring (90).

19. Adaptive absolute angle sensor according to at least one of the preceding claims, **characterized in that** a transparent coding ring (94) has, in portions, cylindrical lenses lying next to one another and serving to generate the code and image the light sources (86) on the photodetector arrangement (89).

20. Adaptive absolute angle sensor according to at least one of the preceding claims, **characterized in that** the coding ring (95) has a prismatic cross section, there being arranged a light source (86) which radiates in the axial direction of the coding ring.

21. Adaptive absolute angle sensor according to at least one of claims 9 to 19, **characterized in that** there are provided on a transparent coding ring (97), in portions, cylinders (98) or lenses (99) lying next to one another and serving to generate the code and image the light sources (86) on the photodetector arrangement (89), where the cylinders extend in the axial direction of the coding ring and are fixed by one end area on the coding ring and are assigned to the light sources and are assigned with their other, exposed end area to the photodetector arrangement (89).

22. Adaptive absolute angle sensor according to claim 21, **characterized in that** the exposed end areas of the cylinders are plane or are of lenticular design.

23. Adaptive absolute angle sensor according to at least one of the preceding claims, **characterized in that** at least one point light source (101, 102) is assigned to the transparent coding ring (90), which has optically transparent regions (91) and optically opaque regions (92).

24. Adaptive absolute angle sensor according to claim 23, **characterized in that** two point light sources (101, 102) are provided next to one another at a constant distance and a single photodetector arrangement (89) is provided.

25. Adaptive absolute angle sensor according to claim 23, **characterized in that** one point light source (101) and two photodetector linear arrays (103, 104), which are arranged one above the other at different distances from the light source (101), are provided.

26. Adaptive absolute angle sensor according to at least one of the preceding claims, **characterized in that** at least one reference code (106) is assigned to the angle-determining code (105) on the coding ring.

27. Adaptive absolute angle sensor according to claim 26, **characterized in that** the reference code (106) is arranged next to the angle-determining code (105).

28. Adaptive absolute angle sensor according to claim 26, **characterized in that** the reference code (106) is provided above and below the angle-determining code (105).

## Revendications

1. Détecteur d'angle de direction adaptatif absolu pour la détermination absolue d'un angle de braquage, en particulier pour l'établissement de l'angle de direction dans un véhicule au moyen d'un code (2) pour une zone d'angle de 360° afin d'établir l'angle; le code (2) et un dispositif de détection (7) étant disposés de façon pivotante l'un par rapport à l'autre ; une détermination absolue de l'angle ayant lieu par la lecture de l'information de contraste grâce à un microprocesseur qui établit aussi bien la situation de l'angle du code que la définition précise de l'angle par la situation relative du code reconnu pour obtenir une image sur le dispositif de photodétection ; le fonctionnement global du système étant en même temps vérifié et adapté lors de chaque mesure,
**caractérisé en ce que**
le code est établi au moyen d'un dispositif de photodétection placé à un seul endroit et qu'il est utifisé pour la détermination de l'angle, qu'un segment lié à la marque de code est représenté sur au moins une ligne du photodétecteur (7) - au moins un mot code correspondant à un angle prédéterminé étant saisi -, que la situation du mot code est mesurée en fonction de la position stable de la ligne du photodétecteur (7), que le code est représenté par un système optique (6) sur la ligne du photodétecteur (7) de sorte qu'avec un cycle de lecture des lignes d'une part on établit l'information absolue sur l'angle et d'autre part on vérifie et on adapte le fonctionnement global du système et qu'au moins une silhouette de référence est projetée sur la ligne du photodétecteur (7) pour contrôler les fonctions du système.

2. Détecteur d'angle de direction adaptatif absolu selon la revendication 1 **caractérisé en ce que** la mesure est réalisée au moyen d'un logiciel dans un microcontrôleur (8) qui utilise à cet effet les données image de la ligne du photodétecteur (7).

3. Détecteur d'angle de direction adaptatif absolu selon la revendication 1 ou 2 **caractérisé en ce que** l'on représente au moins deux images différentes d'un ou de plusieurs codes périphériques sur la ligne du photodétecteur afin d'augmenter la résolution.

4. Détecteur d'angle de direction adaptatif absolu selon au moins l'une des revendications précédentes **caractérisé en ce que** l'on utilise un mot code de 6 bits ou de 7 bits.

5. Détecteur d'angle de direction adaptatif absolu selon au moins l'une des revendications précédentes **caractérisé en ce que** la marque de code est traversée par une lumière parallèle ou qu'elle est éclairée sur un des côtés.

6. Détecteur d'angle de direction adaptatif absolu selon au moins l'une des revendications précédentes **caractérisé en ce que** l'on interprète la pente du signal et la dimension de l'image des signaux représentés sur la ligne du détecteur afin de compenser les tolérances optiques et mécaniques.

7. Détecteur d'angle de direction adaptatif absolu selon au moins l'une des revendications précédentes **caractérisé en ce que** la zone d'angle prend une valeur entre 0° et 360° selon la vitesse du véhicule.

8. Détecteur d'angle de direction adaptatif absolu selon au moins l'une des revendications précédentes **caractérisé en ce que** l'on établit l'angle de direction par un bref contact du détecteur d'angle de direction dans des intervalles de temps où il n'est pas possible que le braquage soit supérieur à 180° afin d'enregistrer l'angle absolu de direction même quand les systèmes du véhicule sont déconnectés.

9. Détecteur d'angle adaptatif absolu selon au moins l'une des revendications précédentes **caractérisé en ce que** l'on a prévu au moins une source de lumière (4, 5) pour éclairer une zone d'angle (3) du code (2) et qu'on a prévu un dispositif de photodétection (7) pour enregistrer la zone d'angle (3) éclairée du code (2), un microcontrôleur étant lié à la source de lumière et au dispositif de photodétection.

10. Détecteur d'angle adaptatif absolu selon la revendication 9 **caractérisé en ce que** l'on a placé symétriquement par rapport à l'axe optique deux diodes électroluminescentes (4, 5) comme sources de lumière, celles-ci ainsi que le dispositif de photodétection (7) et un système optique (6) étant placés sur le même côté de l'anneau de codage (1).

11. Détecteur d'angle adaptatif absolu selon la revendication 9 **caractérisé en ce que** l'on a prévu un anneau de codage (54) circulaire translucide aux endroits éclairés du code et qu'on a placé sur l'un des côtés de l'anneau de codage au moins une diode électroluminescente (52) et sur l'autre côté de l'anneau de codage le dispositif de photodétection (51).

12. Détecteur d'angle adaptatif absolu selon la revendication 11 **caractérisé en ce que** l'on a prévu un système optique (55) sur le côté de la diode électroluminescente (52).

13. Détecteur d'angle adaptatif absolu selon au moins l'une des revendications précédentes **caractérisé en ce que** le dispositif de photodétection présente deux détecteurs (65, 66) placés verticalement l'un au-dessus de l'autre en fonction du trajet de la marque de code (62) pour permettre leur visualisation synchrone et que les images (67, 68) des deux détecteurs sont comparées l'une à l'autre.

14. Détecteur d'angle adaptatif absolu selon la revendication 13 **caractérisé en ce que** l'on a prévu en tant que détecteurs deux détecteurs de lignes (65, 66) ou deux sections d'un détecteur de surface (61) placées l'une au-dessus de l'autre.

15. Détecteur d'angle adaptatif absolu selon au moins l'une des revendications précédentes **caractérisé en ce que** deux détecteurs (84, 85) sont placés horizontalement l'un à côté de l'autre pour permettre l'enregistrement synchrone des mots code contigus de la marque de code (82).

16. Détecteur d'angle adaptatif absolu selon au moins l'une des revendications précédentes **caractérisé en ce qu'**on a prévu comme détecteurs de lumière des dispositifs à couplage de charges (CCD).

17. Détecteur d'angle adaptatif absolu selon au moins l'une des revendications précédentes **caractérisé en ce que** les lignes clair-obscur des mots code présentent une largeur de 2 à 3 mm.

18. Détecteur d'angle adaptatif absolu selon au moins l'une des revendications précédentes **caractérisé en ce qu'**un verre dépoli (87) est placé entre la source de lumière (86) et l'anneau de codage (90) et que le système optique (88) et le dispositif de photodétection (89) sont prévus de l'autre côté de l'anneau de codage (90).

19. Détecteur d'angle adaptatif absolu selon au moins l'une des revendications précédentes **caractérisé en ce qu'**un anneau de codage (94) transparent présente de place en place des lentilles cylindriques placées les unes à côté des autres à effet de produire le code et de représenter les sources de lumière (86) sur le dispositif de photodétection (89).

20. Détecteur d'angle adaptatif absolu selon au moins l'une des revendications précédentes **caractérisé en ce que** l'anneau de codage (95) présente une section transversale prismatique - avec une source de lumière (86) rayonnant en direction axiale de l'anneau de codage.

21. Détecteur d'angle adaptatif absolu selon au moins l'une des revendications 9 à 19 **caractérisé en ce que** l'on a prévu sur un anneau de codage (97) transparent de place en place des cylindres (98) ou des lentilles (99) placées les unes à côté des l'autres à effet de produire le code et de représenter les sources de lumière (86) sur le dispositif de photodétection (89) ; les cylindres s'étendent alors dans la direction axiale de l'anneau de codage, ils sont fixés à l'anneau de codage par une surface frontale et liés aux sources de lumière et ils sont liés au dispositif de photodétection (89) par leurs autres surfaces frontales libres.

22. Détecteur d'angle adaptatif absolu selon la revendication 21 **caractérisé en ce que** les surfaces frontales libres des cylindres sont planes ou en forme de lentille.

23. Détecteur d'angle adaptatif absolu selon au moins l'une des revendications précédentes **caractérisé en ce qu'**au moins une source de lumière (101, 102) ponctuelle est liée à l'anneau de codage (90) transparent qui présente des zones translucides (91) et des zones opaques (92).

24. Détecteur d'angle adaptatif absolu selon la revendication 23 **caractérisé en ce que** l'on a prévu deux sources de lumière (101, 102) ponctuelles l'une à côté de l'autre à intervalles constants et un seul dispositif de photodétection (89).

25. Détecteur d'angle adaptatif absolu selon la revendication 23 **caractérisé en ce que** l'on a prévu une source de lumière (101) ponctuelle et deux lignes de photodétection (103, 104) disposées l'une au-dessus de l'autre à intervalles variables par rapport à la source de lumière (101).

26. Détecteur d'angle adaptatif absolu selon au moins l'une des revendications précédentes **caractérisé en ce que** sur l'anneau de codage au moins un code de référence (106) est lié au code (105) qui détermine l'angle.

27. Détecteur d'angle adaptatif absolu selon la revendication 26 **caractérisé en ce que** le code de référence (106) est disposé à côté du code (105) qui détermine l'angle.

28. Détecteur d'angle adaptatif absolu selon la revendication 26 **caractérisé en ce que** le code de référence (106) est prévu au-dessus et en dessous du code (105) qui détermine l'angle.
